(19) Europäisches Patentamt / European Patent Office / Office européen des brevets

(11) **EP 4 018 831 A1**

(12) **EUROPEAN PATENT APPLICATION**
published in accordance with Art. 153(4) EPC

(43) Date of publication:
**29.06.2022 Bulletin 2022/26**

(21) Application number: **20853823.1**

(22) Date of filing: **19.08.2020**

(51) International Patent Classification (IPC):
***A01N 63/20*** (2020.01)    ***A01P 3/00*** (2006.01)

(52) Cooperative Patent Classification (CPC):
**A01N 63/20**

(86) International application number:
**PCT/JP2020/031274**

(87) International publication number:
**WO 2021/033716 (25.02.2021 Gazette 2021/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.08.2019 JP 2019149967**

(71) Applicants:
• **MMAG Co., Ltd.**
**Tokyo 103-0027 (JP)**
• **Kyoto Prefecture**
**Kyoto-shi, Kyoto 602-8570 (JP)**

(72) Inventors:
• **UMEMURA Kenji**
**Yokohama-shi, Kanagawa 222-8567 (JP)**
• **HATAKEYAMA Satoshi**
**Yokohama-shi, Kanagawa 222-8567 (JP)**

(74) Representative: **J A Kemp LLP**
**80 Turnmill Street**
**London EC1M 5QU (GB)**

(54) **AGENT FOR CONTROLLING SCALD DISEASE AND METHOD FOR CONTROLLING SCALD DISEASE**

(57)    A fire blight control agent contains a lactic acid bacterium having an ability to control fire blight as an active ingredient.

EP 4 018 831 A1

Processed by Luminess, 75001 PARIS (FR)

**Description**

[Technical Field]

The present invention relates to a fire blight control agent containing a lactic acid bacterium.

[Background Art]

The world population is expected to increase from 7.6 billion in 2018 to 9.7 billion in 2050, and further increase after 2050. In order to meet the increasing demand for foods along with the population growth, effective utilization of pesticides and fertilizers, and management of crop production and pest control by digital farming utilizing IT are being in progress. Among these, pesticides are required to play a major role in improving yields more efficiently. On the other hand, in recent years, the adverse effects of pesticides, especially chemically synthesized pesticides, on humans, livestock, aquatic organisms, and useful organisms such as honeybees have been considered as a problem, and regulations regarding the effects of the pesticides on environmental organisms have been becoming more and more restrict. Under these circumstances, the efforts to reduce the environmental burden of the pesticides are being accelerated worldwide by using, instead of or in combination with the chemically synthesized pesticides, biopesticides containing as active ingredients non-pathogenic plant parasites, entomopathogenic microorganisms, natural enemy insects that prey on pests, other useful microorganisms and natural products, and so on existing in nature.

In addition, due to drug resistance and registration restrictions, there may be no existing agent that exhibits sufficient control effect against some pests. In the control scene of such difficult-to-control pests, the above-mentioned biopesticides, for which the number of applications and the time of application are less restricted, also play a major role. The market for biopesticides exceeded 210 billion yen (NPL 1), especially in Europe and North America, where the restrict registration restrictions are imposed on chemically synthesized pesticides, and the market is expected to expand further in the future. As one of such difficult-to-control pests, the damage caused by fire blight has become a major problem in the cultivation of fruit trees such as pears and apples and Rosaceae plants. The above-mentioned fire blight occurs in a wide area such as the Americas, Europe, North Africa, the Middle East, and Oceania regions, and there are few usable agents. In areas where the outbreak of fire blight cannot be suppressed, the plants are cut to prevent the spread of fire blight, and the launch of a new effective agent is desired.

In addition, among the active ingredients of the biopesticides, for example, lactic acid bacteria are generally considered as beneficial for human health, and therefore are capable of eliminating concerns about consumers' safety. Moreover, the lactic acid bacteria are also expected to improve the functionality and the merchantability of agricultural crops. For this reason, it is ideal if the lactic acid bacteria can be applied to the control of fire blight.

As a biopesticide containing a lactic acid bacterium as an active ingredient, PLT 1 reports that soft rot, which is problematic in vegetables, can be controlled by using a plant disease control agent containing a strain belonging to Lactobacillus plantarum, which is a lactic acid bacterium. However, PLT 1 does not mention any effectiveness against fire blight. PLT 2 also reports that soft rot and damping-off diseases can be controlling by using a lactic acid bacterium, but does not mention any effectiveness against fire blight. In addition, PLT 3 states that the same lactic acid bacterium as the strain described in PLT 2 is used for promoting plant growth, but does not describe the effect against fire blight either. In addition, PLT 4 describes a method for controlling fire blight using another Lactobacillus plantarum strain, but the amount of the pesticide applied is large and the control effect is not sufficient.

[Citation List]

[Patent Literature]

[PLT 1] International Publication No. WO2006/025167
[PLT 2] Japanese Patent No. 5272154
[PLT 3] International Publication No. WO2016/021204
[PLT 4] International Publication No. WO2014/184410

[Non Patent Literature]

[NPL 1] Agbioinvestor 2016 database [searched on August 7, 2019], Internet <URL: https://agbioinvestor.com/wp-content/uploads/2018/06/AgBio-USA-Global-biopesticide-market-overview-infographic.pdf>

[Summary of Invention]

[Technical Problem]

The present invention has been made in view of the aforementioned problems in the related art, and has an object to provide a fire blight control agent containing a lactic acid bacterium as an active ingredient, and producing an excellent control effect against fire blight, and provide a fire blight control method.

[Solution to Problem]

During earnest studies with an attempt to improve the foregoing plant pest control technique, the present inventors has found that a lactic acid bacterium, particularly a specific Lactobacillus plantarum, produces a particularly excellent control effect against fire blight, and thereby have completed the present invention. Specifically, the present invention provides the following inventions.

[1] A fire blight control agent, containing a lactic acid bacterium having an ability to control fire blight as an active ingredient;

[2] The fire blight control agent according to [1], in which the lactic acid bacterium is a microorganism belonging to the genus Lactobacillus;

[3] The fire blight control agent according to [1], in which the lactic acid bacterium is a microorganism belonging to Lactobacillus plantarum;

[4] The fire blight control agent according to [1], in which the lactic acid bacterium is Lactobacillus plantarum strain FERM BP-21501;

[5] A fire blight control method including the step of treating a plant and/or soil with a lactic acid bacterium having an ability to control fire blight or a fire blight control agent containing the lactic acid bacterium;

[6] The fire blight control method according to [5], in which the lactic acid bacterium is a microorganism belonging to the genus Lactobacillus;

[7] The fire blight control method according to [5], in which the lactic acid bacterium is a microorganism belonging to Lactobacillus plantarum;

[8] The fire blight control method according to [5], in which the lactic acid bacterium is Lactobacillus plantarum strain FERM BP-21501;

[9] The fire blight control method according to any one of [5] to [8], in which the plant is a plant belonging to Rosaceae;

[10] A method for protecting a plant from fire blight, including the step of treating the plant and/or soil with a lactic acid bacterium having an ability to control fire blight or with a fire blight control agent containing the lactic acid bacterium;

[11] The method according to [10], in which the lactic acid bacterium is a microorganism belonging to the genus Lactobacillus;

[12] The method according to [10], in which the lactic acid bacterium is a microorganism belonging to Lactobacillus plantarum;

[13] The method according to [10], in which the lactic acid bacterium is Lactobacillus plantarum strain FERM BP-21501;

[14] The method according to any one of [10] to [13], in which the plant is a plant belonging to Rosaceae;

[15] Use of a lactic acid bacterium for fire blight control, the lactic acid bacterium having an ability to control fire blight;

[16] The use according to [15], in which the lactic acid bacterium is a microorganism belonging to the genus Lactobacillus;

[17] The use according to [15], in which the lactic acid bacterium is a microorganism belonging to Lactobacillus plantarum;

[18] The use according to [15], in which the lactic acid bacterium is Lactobacillus plantarum strain FERM BP-21501;

[19] Use of a lactic acid bacterium for protecting a plant from fire blight, the a lactic acid bacterium having an ability to control fire blight;

[20] The use according to [19], in which the lactic acid bacterium is a microorganism belonging to the genus Lactobacillus;

[21] The use according to [19], in which the lactic acid bacterium is a microorganism belonging to Lactobacillus plantarum;

[22] The use according to [19], in which the lactic acid bacterium is Lactobacillus plantarum strain FERM BP-21501; and

[23] The use according to any one of [19] to [22], in which the plant is a plant belonging to Rosaceae.

[Advantageous Effects of Invention]

According to the present invention, it is possible to provide a fire blight control agent containing a lactic acid bacterium as an active ingredient and producing an excellent control effect against fire blight, and to provide a fire blight control method. Since the present invention makes it possible to exhibit an excellent control effect against difficult-to-control fire blight, it is possible to produce Rosaceae crops stably.

[Brief Description of Drawings]

[Fig. 1] Fig. 1 is an appearance photograph showing the states of leaf falls of apple trees due to fire blight, in which, from the left, (a) the apple tree was untreated, (b) the apple tree was treated with Formulation Example 1 (BY strain concentration: $2.1 \times 10^7$ CFU/mL), (c) the apple tree was treated with Formulation Example 1 (BY strain concentration: $5.3 \times 10^7$ CFU/mL), and (d) the apple tree was treated with a control agent, wettable powder of Streptomycin 17 (treatment dose: 200 g ai/ha).
[Fig. 2] Fig. 2 is an appearance photograph of tomato stems treated with water.
[Fig. 3] Fig. 3 is an appearance photograph of tomato stems inoculated with BY strain (concentration: $4.6 \times 10^9$ CFU/mL).
[Fig. 4] Fig. 4 is an appearance photograph showing the development of grapevine crown gall on tomato stems inoculated with Agrobacterium vitis (concentration: $2 \times 10^7$ CFU/mL) .
[Fig. 5] Fig. 5 is an appearance photograph showing the development of grapevine crown gall on tomato stems inoculated with a mixture liquid of BY strain and Agrobacterium vitis (BY strain concentration: $4.6 \times 10^9$ CFU/mL and Agrobacterium vitis concentration: $2 \times 10^7$ CFU/mL).

[Description of Embodiments]

Hereinafter, the present invention will be described in details. A fire blight control agent of the present invention contains, as an active ingredient, a lactic acid bacterium having an ability to control fire blight. A fire blight control method of the present invention includes the step of treating a plant and/or soil with a lactic acid bacterium having an ability to control fire blight or with a fire blight control agent containing the lactic acid bacterium.
The present invention also provides a method for protecting a plant from fire blight, the method including the step of treating the plant and/or soil with the lactic acid bacterium or the fire blight control agent of the present invention; use of the lactic acid bacterium for fire blight control; and use of the lactic acid bacterium for protecting a plant from fire blight (hereinafter, collectively referred to as the "protection method or use" in some cases).
In the present invention, an ability to control a plant disease is an ability to prevent a plant from being infected with a causal pathogen and to suppress the growth of the causal pathogen and the pathogenesis. Then, the ability to control fire blight is an ability to prevent a plant from being infected with a causal pathogen of fire blight and to suppress the growth of the causal pathogen of fire blight and the pathogenesis of fire blight. Such control ability may be obtained by any of an antibiotic action, a competitive action, and a resistance-inducing action, or may be obtained by to a combination of any two or more of these actions. Here, the antibiotic action is an action to suppress the infection, survival or growth of the causal pathogen by producing an antibiotic. The competitive action is an action to suppress the infection, survival, or growth of the causal pathogen by growing more rapidly than the causal pathogen and occupying a space or preempting nutrients ahead of the causal pathogen. Then, the resistance-inducing action is an action to suppress the infection, survival or growth of the causal pathogen by increasing the resistance of a plant with a substance produced by the plant through the action.
As the foregoing causal pathogen of fire blight, there is Erwinia amylovora belonging to the genus Erwinia.
In the present invention, "a lactic acid bacterium having an ability to control fire blight" is preferably a lactic acid bacterium with which an incidence rate in leaves and branches (or stems) of a Rosaceae plant, which is spray-inoculated with 935 L of a spore suspension of Erwinia amylovora ($1 \times 10^7$ CFU/mL) per hector of an cultivation area and is subjected to spray treatment in which the lactic acid bacteria at $2.1 \times 10^7$ to $5.3 \times 10^7$ CFU/mL in terms of viable count are sprayed in a dose of 935 L per treatment onto the leaves and branches (or stems) of the Rosaceae plant before and after the inoculation of the spore suspension, within 30 days after the final spray treatment ((the length of shoots (or the number of leaves, area, or the like) with symptoms observed on leaves and branches (or stems))/(the total length of shoots (or the number of leaves, area, or the like) examined) $\times$ 100[%]) is 50 or less and preferably 20 or less with respect to the incidence rate in leaves and branches (or stems) of a Rosaceae plant in the same variety without the above spray treatment set to 100. The number of times of the spray treatment is preferably 1 to 5 depending on the kind, cultivation region, and so on of the plant.

Such a lactic acid bacterium preferably belongs to the genus Lactobacillus. As the genus Lactobacillus, there are Lactobacillus plantarum, Lactobacillus mali, Lactobacillus suebicus, Lactobacillus alimentarius, Lactobacillus sakei, Lactobacillus pentosus, Lactobacillus brevis, Lactobacillus malefermentans, Lactobacillus lactis, Lactobacillus gasseri, Lactobacillus acidophilus, Lactobacillus bulgaricus, and Lactobacillus casei. Among these, Lactobacillus plantarum is preferable.

As a lactic acid bacterium belonging to the foregoing Lactobacillus plantarum, more specifically, Lactobacillus plantarum strain FERM BP-21501 (herein referred to as "BY strain" in some cases) described in PTL 2 and PTL 3 is preferable. The Lactobacillus plantarum strain FERM BP-21501 was isolated in November 2006 using salted squid, which is a fermented food, as an isolation source, and has been deposited as follows.

(1) Identification display: Lactobacillus plantarum SOK04BY
(2) Accession number: FERM BP-21501 (For FERM P-21501 deposited on February 5, 2008 in Japan, a request for transfer to an international deposit under the Budapest Treaty was received on April 30, 2015.)
(3) Depositor: Shigetoshi Kitayama, Director, Kyoto Prefectural Agriculture, Forestry and Fisheries Technology Center
(4) Name of depositary organization: International Patent Organism Depositary, National Institute of Technology and Evaluation
(5) Address of depositary institution: Postal code 292-0818 Room 120, 2-5-8 Kazusakamatari, Kisarazu City, Chiba Prefecture, Japan

The Lactobacillus plantarum specified by the accession number: FERM BP-21501 may be a successor strain of the same strain, or an artificial mutant strain, a natural mutant strain, or a genetically modified strain of the same strain or the successor strain thereof within a range that does not impair the effect of the present invention (in other words, a range in which the strain has the aforementioned ability to control fire blight).

The foregoing lactic acid bacteria as the active ingredient of the present invention may be used as they are. The fire blight control agent of the present invention may consist of only the lactic acid bacteria or may be a composite further containing another ingredient. The other ingredient may be a horticulturally acceptable carrier for mainly making a form suitable for usage purpose.

Possible forms (formulations) of the fire blight control agent of the present invention include formulations such as emulsion, liquid, water solvent, emulsion, wettable powder, granular wettable powder, flowable agent, suspo-emulsion, powder, DL powder, granules, fine granules F, tablets, oil, aerosol, smoke agent, and microcapsules. These formulations may be produced according to, for example, a method described in "Agrochemical Formulation Guide" (edited by Pesticide Science Society of Japan and Special Committee on Agricultural Formulation and Application, published by Japan Plant Protection Association, 1997). As a horticulturally acceptable carrier for making such formulations, there are solid carriers and liquid carriers.

The solid carriers include are talc, bentonite, clay, kaolin, diatomite, white carbon (hydrous silicon dioxide), vermiculite, silica sand, pumice, pearlite, calcium carbonate, ammonium sulfate, potassium sulfate, calcium sulfate, plant particles (such as wood powder), starch, dextrin, and the like. One of these may be used alone, or two or more of these may be used in combination. Among these, preferable ones are talc, bentonite, clay, kaolin, diatomite, white carbon (hydrous silicon dioxide), silica sand, and calcium sulfate.

The liquid carriers include: alcohols such as ethanol, n-hexanol, polyethylene glycol, and propylene glycol; ketones such as γ-butyrolactone and cyclohexanone; aliphatic hydrocarbons such as n-hexane, normal paraffin, liquid paraffin, and naphthene; aromatic hydrocarbons such as xylene, alkylbenzene, and methylnaphthalene; ethers such as diethyl ether, dioxane, and tetrahydrofuran; esters such as fatty acid methyl ester and ethyl acetate; nitriles such as acetonitrile and isobutyronitrile; acid amides such as dimethylformamide and dimethylacetamide; vegetable oils such as soybean oil and cottonseed oil; dimethyl sulfoxide; N-alkylpyrrolidone; water; lactic acid bacteria culture solution; and so on. One of these may be used alone, or two or more of these may be used in combination. Among these, preferable ones are propylene glycol, liquid paraffin, and water.

The fire blight control agent of the present invention may further contain a pharmaceutic aid as the other ingredient in addition to the foregoing horticulturally acceptable carrier. The pharmaceutic aids include surfactants each having a function for emulsification, dispersion, wetting, or the like; thickeners; binders; antifoaming agents; coloring agents; antifungal agents; and antifreeze agents. One of these may be used alone, or two or more of these may be used in combination.

The above surfactants include: anionic surfactants such as sodium lignin sulfonate, sodium lauryl sulphate, condensate of sodium naphthalene sulfonate formalin, polyoxyalkylene alkyl ether sodium sulfate, sodium alkylbenzene sulfonate, sodium dialkyl sulfosuccinate, polyoxyalkylene styrene phenyl ether sodium sulfate, and polyoxyalkylene styrene phenyl ether sodium phosphate; and nonionic surfactants such as polyoxyalkylene sorbitan fatty acid ester, polyoxyalkylene castor oil, polyoxyalkylene cured castor oil, polyoxyalkylene alkyl ether, polyoxyalkylene styrylphenyl ether, and polyoxyethylene/polyoxypropylene block polymer. One of these may be used alone, or two or more of these may be used in combination.

In the fire blight control agent of the present invention, the content of the lactic acid bacteria as the active ingredient can be adjusted as appropriate depending on the formulation, usage method, the amount of usage and so on of the agent, and is not particularly limited. However, in general, the content in terms of viable count is $1 \times 10^5$ CFU/g or more, preferably $1 \times 10^5$ to $1 \times 10^{15}$ CFU/g, and more preferably $1 \times 10^6$ to $1 \times 10^{14}$ CFU/g.

In the fire blight control agent and the fire blight control method of the present invention (including the protection method or use of the present invention, the same shall apply below), the lactic acid bacteria may be viable cells, dead cells, or a processed product of any kind of these, for example, a dried product, a frozen product, or a crushed product), but are preferably viable cells.

In the fire blight control method of the present invention, a method for treating the plant and/or soil before inoculation (or infection) with a causal pathogen and/or after the inoculation (or the infection) is not particularly limited, and examples thereof include spray treatment, immersion treatment, soil drench treatment, soil mixing treatment, and soil surface treatment. More specifically, as such treatments, for example, the following methods can be cited.

(1) There are a method for spraying seeds, seedlings or trees (leaves, stems, or branches) of plants with a dispersion liquid (suspension liquid) in which the lactic acid bacteria of the present invention are dispersed in the liquid carrier, or the fire blight control agent of the present invention in a dispersion liquid (suspension liquid) form (for example, a strain culture liquid) (spray treatment with a suspension liquid) and a method for immersing seeds, seedlings or trees (leaves, stems, or branches) of plants in the dispersion liquid or the fire blight control agent (immersion treatment).

(2) There is a method for treating the soil with the dispersion liquid in which the lactic acid bacteria of the present invention are dispersed or the fire blight control agent of the present invention in the dispersion liquid form. This includes spray treatment of spraying and soil drench treatment of drenching soil such as seedling raising soil or field soil with the dispersion liquid or the fire blight control agent. In these cases, the soil may be treated either before or after planting of the plants.

(3) There is a method for treating plants or seeds with powder in which the lactic acid bacteria of the present invention are pulverized, granules prepared by adhering the lactic acid bacteria of the present invention to carriers, or the fire blight control agent of the present invention in a powdery or granular form (such as spray treatment with a solid substance).

(4) There is a method for treating soil with powder in which the lactic acid bacteria of the present invention are pulverized, granules prepared by adhering the lactic acid bacteria of the present invention to carriers, or the fire blight control agent of the present invention in a powdery or granular form. This includes treatment of mixing the powder or granules into the above-mentioned various culture soils and field soil (such as soil mixing treatment) and treatment of dusting the powder or granules on the field soil (such as soil surface treatment).

In the fire blight control method of the present invention, the lactic acid bacteria and the fire blight control agent according to the present invention may be, in each case, further diluted with any of the foregoing liquid carriers, and used. For example, in the case where the plant and/or soil is treated with the above spray treatment, a desirable concentration of the lactic acid bacteria (preferably the BY strain) in terms of viable count is $1 \times 10^5$ to $1 \times 10^{10}$ CFU per milliliter of a spray solution.

In each case of the fire blight control agent and the fire blight control method of the present invention for treating plants and/or soil, an effective dose (treatment dose) of the lactic acid bacteria (preferably the BY strain) for each time of the treatment is independently preferably $1 \times 10^{11}$ to $1 \times 10^{16}$ CFU and more preferably $1 \times 10^{12}$ to $1 \times 10^{15}$ CFU per hector of an cultivation area in terms of viable count. The above treatment may be conducted multiple times. The number of times of the treatment is not particularly limited because it can be adjusted as appropriate depending on the kind, cultivation place, growing season, and so on of the plants, but is preferably, for example, 1 to 5 times per two weeks.

Preferable plants to be treated with the fire blight control agent and the fire blight control method of the present invention are plants belonging to Rosaceae such as strawberry, plum, peach, apple, Nashi pear, pear, quince, hawthorn, cotoneaster, and Japanese rowan.

In addition, the fire blight control agent and the fire blight control method of the present invention may further treat other plants. Such other plants include: chenopodiaceae plants such as spinach; gramineae plants such as rice and corn; araceae plants such as taro, calla, and pothos; liliaceae plants such as leek, onion, tulip, and lily; brassicaceae plants such as cabbage, Chinese cabbage, radish, stock, kale, and mizuna; legume plants such as soybean and adzuki bean; umbelliferae plants such as carrot and parsley; solanaceae plants such as red pepper, eggplant, tomato, potato, and petunia; cucurbitaceae plants such as cucumber, watermelon, and pumpkin; asteraceae plants such as burdock, lettuce, chrysanthemum, cosmos, and sunflower; iridaceae plants such as gladiolus; plumbaginaceae plants such as statice; gesneriaceae plants such as Saintpaulia; scrophulariaceae plants such as snapdragon and torenia; dianthus plants such as carnation and gypsophila; convolvulaceae plants such as morning glory; amaryllidaceae plants such as daffodil; orchidaceae plants such as cattleya and cymbidium; ebenaceae plants such as persimmon; morus alba plants such as fig; vitaceae plants such as grape; fagaceae plants such as chestnut; rutaceae plants such as citrus unshiu and lemon; and actinidiaceae plants such as kiwifruit, and are preferably crops.

In addition, the fire blight control agent and the fire blight control method of the present invention may further control other plant diseases. Such other plant diseases include diseases that occur in the above other plants such as wilt, damping-off, strain rot, half-body wilt, black spot disease, root-knot disease, epidemics, white rust, downy mildew, rust, helicobasidium mompa, southern blight, powdery mildew, glomerella cingulata, gray mold disease, rice blight, soft rot disease, bacterial wilt disease, black rot disease, canker, bacterial blight, crown gall, and scab disease.

Then, the causal pathogens of the foregoing other plant diseases are filamentous fungi in the genus Fusarium, the genus Pythium, the genus Rhizoctonia, the genus Verticillium, the genus Alternaria, the genus Plasmodiophora, the genus Phytophthora, the genus Albugo, the genus Peronospora, the genus Puccinia, the genus Hericobasidium, the genus Sclerotium, the genus Sphaerotheca, the genus Colletotrichum, the genus Botrytis, the genus Pyricularia, and so on; bacteria other than the causal pathogen of fire blight such as bacteria in the genus Erwinia, the genus Ralstonia, the genus Xanthomonas, the genus Clavibacter, the genus Pseudomonas, the genus Agrobacterium, and so on); and actinomycetes in the genus Streptomyces, and so on.

[Examples]

Hereinafter, the present invention will be described in details by using Examples, but the present invention should not be limited to these Examples.

<Formulation Example 1: Preparation of Wettable Powder>

Wettable powder was prepared by using Lactobacillus plantarum strain FERM BP-21501 (BY strain) as lactic acid bacteria. The wettable powder was prepared by uniformly mixing and pulverizing 10% by weight of the BY strain, 0.5% by weight of sodium lauryl sulfate, 4.5% by weight of sodium lignin sulfonate, 2.5% by weight of white carbon, and 82.5% by weight of clay. In the obtained wettable powder, the concentration of the bacteria (viable cells) was $1 \times 10^{10}$ CFU/g in each case.

<Example 1: Test for Apple Fire Blight Control>

The wettable powder of Formulation Example 1 was diluted with water to prepare each spray solution in which the concentration of the BY strain was set to the concentration specified in Table 1 below. In the tip end branch and other five spurs of a two year old apple tree (variety: Lady), 1/3 from the tip of each of leaves was cut with scissors. The day after the leaves were cut, first spraying was conducted with 935 L/ha of the above spray solution. The day after the above spraying, the tree was spray-inoculated with a spore suspension of Erwinia amylovora ($1 \times 10^7$ CFU/mL) at 935 L/ha and was managed under a wet condition for about 12 hours until the next morning. The second and third spraying was conducted with the same dose as in the first spraying (935 L/ha of the above spray solution) one day and 9 days after the inoculation, respectively. Five days after the third spraying, the leaves and branches were examined and an incidence rate was calculated in accordance with the following formula:

$$\text{Incidence rate (\%)} = (\text{the length of shoots with symptoms observed on leaves and branches/the total length of shoots examined}) \times 100.$$

In addition, the incidence rate was calculated in the same manner for an apple tree (untreated) that was treated in the same way except that water was sprayed instead of the spray solutions. Furthermore, a control value was calculated based on the obtained incidence rates in accordance with the following formula:

Control value = ((the incidence rate of the untreated apple tree - the incidence rate of the apple tree treated with each spray solution)/the incidence rate of the untreated apple tree) × 100.

Moreover, a control value was obtained in the same method except that wettable powder of Streptomycin 17, which is a chemically synthesized pesticide, was used as a control agent and that the treatment dose per spraying was set to the dose shown in the concentration field of Table 1 below. In all the cases, the apple trees were managed in the field during the test period.

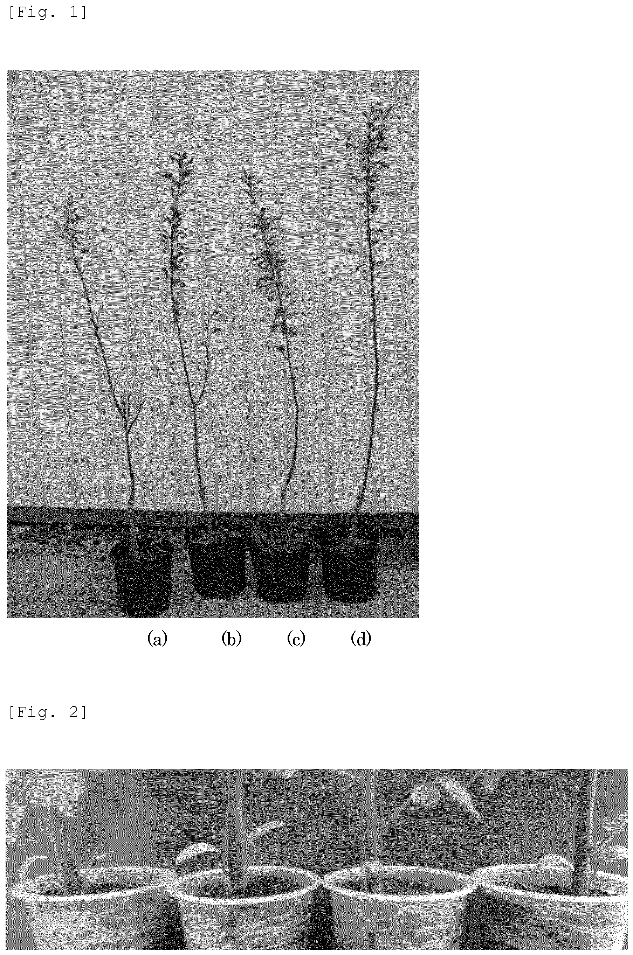

Table 1 presented below shows the results together with the concentration of each of the spray solutions and the treatment dose of the control agent. Then, Fig. 1 shows an appearance photograph showing the states of leaf falls of the apple trees due to fire blight, in which (a) the apple tree was untreated, (b) the apple tree was treated with Formulation Example 1 (BY strain concentration: $2.1 \times 10^7$ CFU/mL), (c) the apple tree was treated with Formulation Example 1 (BY strain concentration: $5.3 \times 10^7$ CFU/mL), and (d) the apple tree was treated with the wettable powder of Streptomycin 17 as the control agent (treatment dose: 200 g ai/ha).

[Table 1]

| Agent | Concentration | Incidence Rate (%) | Control Value |
|---|---|---|---|
| Untreated | - | 45.0 | - |
| Wettable powder of Formulation Example 1 | $2.1 \times 10^7$ CFU/mL | 6.4 | 86 |
| Wettable powder of Formulation Example 1 | $5.3 \times 10^7$ CFU/mL | 4.0 | 91 |
| Wettable powder of Streptomycin 17 | 200 gai/ha | 4.0 | 91 |

The fire blight control agent of the present invention exhibits the same control effect as the chemically synthesized pesticide, Streptomycin against the apple fire blight as shown in Table 1, and apparently more suppressed the leaf fall due to apple fire blight damage than in the case without the treatment as shown in Fig. 1.

<Reference Example 1: Test for Apple Anthrax Control>

The wettable powder of Formulation Example 1 was diluted with water to prepare a spray solution in which the concentration of the BY strain was set to the concentration specified in Table 2 below. The prepared spray solution was sprayed on apple fruits (variety: Ohrin) at 5 ml per fruit (n = 3) (spray treatment). The treated apple fruits were allowed to stand at 25°C under a dark condition. The apple fruits were spray-inoculated with a conidia suspension of Colletotrichum acutatum 40 hours after the above treatment, and then were managed in a moist chamber at 25°C under a dark condition. An average of the numbers of lesions formed on the fruit surfaces was calculated 6 days after the inoculation. In addition, an average of the numbers of lesions formed on the fruit surfaces was also calculated in the same manner for apple fruits (untreated) that were treated in the same way except that water was sprayed instead of the above spray solution. A control value was calculated based on the obtained numbers of lesions (average values) in accordance with the following formula:

Control value = ((the number of lesions of the untreated apple fruits - the number of lesions of the apple fruits treated with the spray solution)/the number of lesions of the untreated apple fruits) × 100.

Moreover, a control value was obtained in the same method except that Fantastista granules hydrating agent (pyribencarb 40% wettable powder), which is a chemically synthesized pesticide, was used as a control agent and the concentration of pyribencarb was set to the volume specified in the concentration field of Table 2 below. Table 2 presented below shows the results together with the concentrations of the spray solution and the control agent.

[Table 2]

| Agent | Concentration | Number of Lesions | Control Value |
|---|---|---|---|
| Untreated | - | 45.0 | - |
| Wettable powder of Formulation Example 1 | $2.3 \times 10^7$ CFU/mL | 1.3 | 97 |
| Fantastista granules hydrating agent | 66.6 ppm* | 3.7 | 92 |
| * Pyribencarb concentration | | | |

As shown in Table 2, the fire blight control agent of the present invention exhibits approximately the same control effect as the chemically synthesized pesticide, Fantastista granules hydrating agent against the apple anthrax.

<Reference Example 2: Test for Agrobacterium Vitis Control>

Toothpicks were immersed in a water suspension liquid of the BY strain (BY strain concentration: $4.6 \times 10^9$ CFU/mL), a water suspension liquid of Agrobacterium vitis (Agrobacterium concentration: $2 \times 10^7$ CFU/mL), and a mixture of the above two water suspension liquids (BY strain concentration: $4.6 \times 10^9$ CFU/mL and Agrobacterium concentration: $2 \times 10^7$ CFU/mL). Then, inoculation was performed by sticking the toothpicks into 30 spots of each tomato stem at the 4 leaf stage cultivated in a pot. Two weeks after the above inoculation, the development of crown gall was examined. In addition, a negative control was prepared in the same manner except that toothpicks immersed in water were used.

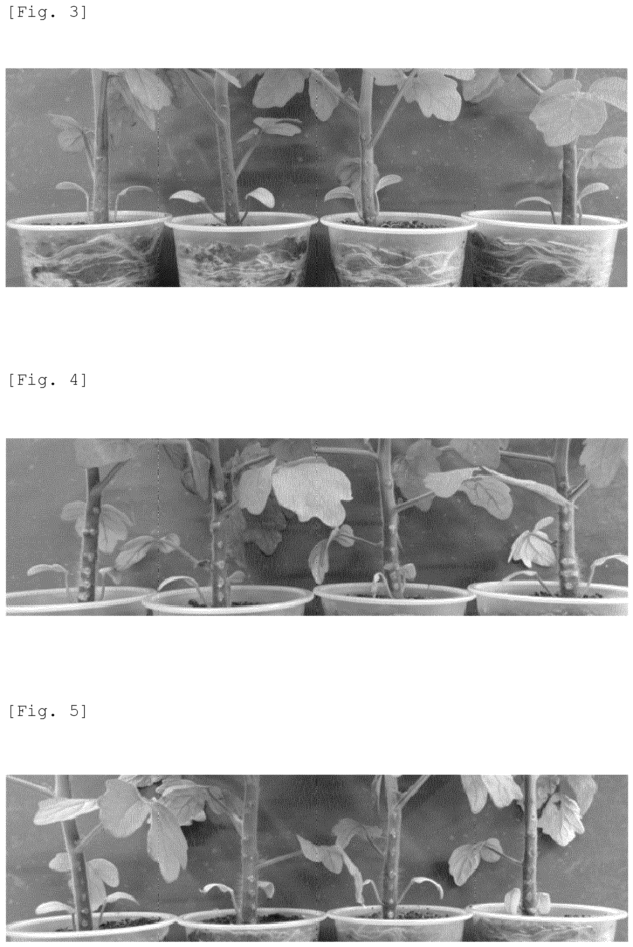

Fig. 2 shows an appearance photograph of tomato stems treated with water (negative control), Fig. 3 shows an appearance photograph of tomato stems inoculated with the BY strain, Fig. 4 shows an appearance photograph showing the development of grapevine crown gall on tomato stems inoculated with Agrobacterium vitis, and Fig. 5 shows an appearance photograph showing the development of grapevine crown gall on tomato stems inoculated with the mixture liquid of the BY strain and Agrobacterium vitis.
As shown in Figs. 2 to 5, the development of crown gall due to the causal pathogen was apparently suppressed on the tomato stems treated with the mixture liquid of the BY strain and Agrobacterium vitis (Fig. 5), which suggests that the fire blight control agent of the present invention may exhibit the same controlling effect against agrobacterium vitis caused by a similar kind of pathogen.

<Example 2: Field Evaluation for Apple Fire Blight>

The wettable powder of Formulation Example 1 was diluted with water to prepare a spray solution in which the concentration of the BY strain was $2.1 \times 10^7$ CFU/mL. Stems and leaves of apple trees (variety: Gala) cultivated in an open field (cultivation area: 1 ha) were sprayed with the above spray solution at 935 L/ha ($2 \times 10^{13}$ CFU/ha) per treatment, 4 times in total: including (1) 8 days before inoculation with apple Erwinia amylovora (bud stage), (2) one day before the inoculation (30% flowering stage), (3) two days after the inoculation, and (4) 6 days after the inoculation. Meanwhile, a spore suspension of Erwinia amylovora ($1 \times 10^7$ CFU/mL) was sprayed at 935 L/ha on flowers of the above apple trees one day after the second spraying (2). Thirty days after the fourth spraying (4), lesions formed on the leaves at the flower portions of the above apple trees were examined and an incidence rate was calculated in accordance with the following formula:

```
Incidence rate (%) = (the number of leaves with lesions

observed/the total number of leaves examined) × 100.
```

In addition, an incidence rate was calculated in the same manner for apple trees (untreated) that were treated in the same way except that water was sprayed instead of the spray solution. Furthermore, a control value was calculated based on the obtained incidence rates in accordance with the following formula:

```
Control value = ((the incidence rate of the untreated
apple trees - the incidence rate of the apple trees
treated with the spray solution)/the incidence rate of
the untreated apple trees) × 100.
```

Table 3 presented below shows the results together with the concentration of the spray solution.

[Table 3]

| Agent | Concentration | Incidence Rate (%) | Control Value |
|---|---|---|---|
| Untreated | - | 13.0 | - |
| Wettable powder of Formulation Example 1 | $2.1 \times 10^7$ CFU/mL | 5.5 | 58 |

As shown in Table 3, it is confirmed that the fire blight control agent of the present invention exhibits the excellent control effect against apple fire blight in the field test. This suggests that the fire blight control agent of the present invention may improve the yield of fruits.

<Example 3: Test for Erwinia amylovora Control>

The wettable powder of Formulation Example 1 was diluted such that the concentration of the BY strain led to a treatment dose of $3 \times 10^{13}$ CFU/ha, and then was sprayed onto a culture medium plate where Erwinia amylovora was cultured on MRS medium in advance. As a result, the growth area of Erwinia amylovora on the plate sprayed with the Formulation Example 1 is 59% while the growth area of Erwinia amylovora on a plate prepared in the same manner except that water was sprayed is 100%. This confirms that Formulation Example 1 can suppress the growth of Erwinia amylovora by 41%. Since the spray solution dose in the United States is 935 L/ha (100 gallons/acre) in general, it is suggested that the fire blight control agent of the present invention may exhibit sufficient antibacterial activity against Erwinia amylovora when sprayed, for example, in the above spray solution dose at the concentration of about $3.2 \times 10^7$ CFU/mL.

[Industrial Applicability]

According to the present invention, it is possible to provide a fire blight control agent containing a lactic acid bacterium as an active ingredient and producing an excellent control effect against fire blight, and to provide a fire blight control method as described above. The lactic acid bacterium according to the present invention may be used for control of other plant diseases in addition to control of fire blight. Moreover, the present invention makes it possible to control fire blight by using the lactic acid bacterium, which is considered as beneficial for human health, and therefore makes contribution to safe and stable production of agricultural crops.

Claims

1. A fire blight control agent, comprising a lactic acid bacterium having an ability to control fire blight as an active ingredient.

2. The fire blight control agent according to claim 1, wherein the lactic acid bacterium is a microorganism belonging to the genus Lactobacillus.

3. The fire blight control agent according to claim 1, wherein the lactic acid bacterium is a microorganism belonging to Lactobacillus plantarum.

4. The fire blight control agent according to claim 1, wherein the lactic acid bacterium is Lactobacillus plantarum strain FERM BP-21501.

5. A fire blight control method comprising the step of treating a plant and/or soil with a lactic acid bacterium having an ability to control fire blight or a fire blight control agent containing the lactic acid bacteria.

6. The fire blight control method according to claim 5, wherein the lactic acid bacterium is a microorganism belonging to the genus Lactobacillus.

7. The fire blight control method according to claim 5, wherein the lactic acid bacterium is a microorganism belonging to Lactobacillus plantarum.

8. The fire blight control method according to claim 5, wherein the lactic acid bacterium is Lactobacillus plantarum strain FERM BP-21501.

9. The fire blight control method according to any one of claims 5 to 8, wherein the plant is a plant belonging to Rosaceae.

[Fig. 1]

(a)    (b)    (c)    (d)

[Fig. 2]

[Fig. 3]

[Fig. 4]

[Fig. 5]

**INTERNATIONAL SEARCH REPORT**

| International application No. |
| --- |
| PCT/JP2020/031274 |

| A.   CLASSIFICATION OF SUBJECT MATTER |
| --- |
| A01N 63/20(2020.01)i; A01P 3/00(2006.01)i<br>FI: A01N63/20; A01P3/00 |
| According to International Patent Classification (IPC) or to both national classification and IPC |

| B.   FIELDS SEARCHED |
| --- |
| Minimum documentation searched (classification system followed by classification symbols)<br>A01N63/20; A01P3/00 |
| Documentation searched other than minimum documentation to the extent that such documents are included in the fields searched<br>　　Published examined utility model applications of Japan　　1922-1996<br>　　Published unexamined utility model applications of Japan　　1971-2020<br>　　Registered utility model specifications of Japan　　1996-2020<br>　　Published registered utility model applications of Japan　　1994-2020 |
| Electronic data base consulted during the international search (name of data base and, where practicable, search terms used)<br>　　JSTPlus/JMEDPlus/JST7580 (JDreamIII); CAplus/REGISTRY<br>　　/MEDLINE/EMBASE/BIOSIS/WPIDS (STN) |

| C.   DOCUMENTS CONSIDERED TO BE RELEVANT | | |
| --- | --- | --- |
| Category* | Citation of document, with indication, where appropriate, of the relevant passages | Relevant to claim No. |
| X<br>Y | US 2016/0113286 A1 (UNIVERSITAT DE GIRONA)<br>28.04.2016 (2016-04-28) claims, examples, figures | 1-3, 5-7, 9<br>1-9 |
| X<br>Y | US 2018/0070586 A1 (THE BOARD OF TRUSTEES OF THE<br>UNIVERSITY OF ILLINOIS) 15.03.2018 (2018-03-15)<br>claims, paragraphs [0004], [0040], examples,<br>figures | 1-3, 5-7, 9<br>1-9 |
| X<br>Y | Eur J Plant Pathol, 2013, 137, 621-633 Abstract,<br>"Materials and methods", "Results" | 1-3, 5-7, 9<br>1-9 |
| Y | WO 2016/021204 A1 (KYOTO-FU) 11.02.2016 (2016-02-<br>11) claims, paragraph [0017], examples, etc. | 1-9 |
| Y | JP 2009-201459 A (KYOTO-FU) 10.09.2009 (2009-09-<br>10) claims, paragraphs [0021], [0061]-[0063],<br>examples, etc. | 1-9 |

☒　Further documents are listed in the continuation of Box C.　　　☒　See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>　　07 October 2020 (07.10.2020) | Date of mailing of the international search report<br>　　20 October 2020 (20.10.2020) |
| --- | --- |
| Name and mailing address of the ISA/<br>　　Japan Patent Office<br>　　3-4-3, Kasumigaseki, Chiyoda-ku,<br>　　Tokyo 100-8915, Japan | Authorized officer<br><br>Telephone No. |

Form PCT/ISA/210 (second sheet) (January 2015)

**INTERNATIONAL SEARCH REPORT**

| International application No. |
|---|
| PCT/JP2020/031274 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2017-501742 A (SYMBORG S.L.) 19.01.2017 (2017-01-19) claims, examples, etc. | 1-9 |

Form PCT/ISA/210 (continuation of second sheet) (January 2015)

**INTERNATIONAL SEARCH REPORT**
Information on patent family members

International application No.

PCT/JP2020/031274

| Patent Documents referred in the Report | Publication Date | Patent Family | Publication Date |
|---|---|---|---|
| US 2016/0113286 A1 | 28 Apr. 2016 | WO 2014/184410 A1 EP 2998387 A1 ES 2522716 A1 | |
| US 2018/0070586 A1 | 15 Mar. 2018 | (Family: none) | |
| WO 2016/021204 A1 | 11 Feb. 2016 | US 2017/0231166 A1 claims, examples, paragraph [0036] EP 3178921 A1 | |
| JP 2009-201459 A | 10 Sep. 2009 | (Family: none) | |
| JP 2017-501742 A | 19 Jan. 2017 | US 2016/0262400 A1 claims, examples WO 2015/067765 A1 EP 2871245 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006025167 A
- JP 5272154 B
- WO 2016021204 A
- WO 2014184410 A

**Non-patent literature cited in the description**

- *Agbioinvestor 2016 database,* 07 August 2019, https://agbioinvestor.com/wp-content/uploads/2018/06/AgBio-USA-Global-biopesticide-market-overview-infographic.pdf>
- Agrochemical Formulation Guide. Japan Plant Protection Association, 1997